# EUROPEAN PATENT SPECIFICATION

(11) **EP 1 958 861 B1**
(45) Date of publication and mention of the grant of the patent: **26.03.2014**
(21) Application number: 08250501.7
(22) Date of filing: 12.02.2008
(51) Int. Cl.: B62K 11/10, B62K 19/46, B62J 17/06

(54) **Vehicle**
Fahrzeug
Véhicule

(30) Priority: 13.02.2007 JP 2007032710
(43) Date of publication of application: 20.08.2008
(73) Proprietor: Yamaha Hatsudoki Kabushiki Kaisha, Iwata-shi, Shizuoka 438-8501 (JP)
(72) Inventor: Yamamoto, Yoshiaki c/o Yamaha Hatsudoki Kabushiki Kaisha, Shizuoka-ken 438-8501 (JP); Shimokawa, Hiroshi c/o Yamaha Hatsudoki Kabushiki Kaisha, Shizuoka-ken 438-8501 (JP); Nakamura, Takuya c/o Yamaha Hatsudoki Kabushiki Kaisha, Shizuoka-ken 438-8501 (JP)
(74) Representative: Moreland, David

(56) References cited:
- EP-A- 1 081 032
- EP-A- 1 245 442
- EP-A- 1 422 133
- EP-A- 1 864 900

## Description

### FIELD OF THE INVENTION

The present invention relates to a vehicle, and in particular to a scooter type vehicle.

### BACKGROUND TO THE INVENTION

Prior art document JP-A-2001-260968 discloses a conventional scooter type vehicle. With such a scooter type vehicle, a steering shaft is supported on a head pipe of a body frame to be able to turn, and a steering handle is fixed to an upper end of the steering shaft. The steering handle is covered by a handle cover.

Also, the periphery of the steering shaft is covered by a cover. The cover includes a front cover positioned on the front of a vehicle and an inner cover integral with the front cover toward a vehicle rear side relative to the front cover. The front cover comprises a base material made of a resin, the surfaces of which are coated, and the inner cover is made of a resin and is not coated.

The inner cover includes an upper top surface extending in a longitudinal direction of a vehicle to face upwardly of the vehicle and an upright wall surface extending downwardly of the vehicle to extend to a footboard from an edge of the upper top surface toward the rear of the vehicle. The upper top surface is inclined to become lower toward the rear of the vehicle. Also, a visor is provided toward the front of the vehicle relative to the steering handle and extends upwardly of the vehicle from the upper top surface and also extends in the vehicle width direction. Meters such as a speedometer, etc. are provided in the visor.

A main switch for interrupting an electric circuit, etc. is arranged at a lower end of a handle cover positioned toward a vehicle upper portion relative to the upper top surface of the inner cover. Also, a compartment having an insertion port is formed on the upright wall surface of the inner cover and the insertion port is covered by a compartment lid, of which a lower end is able to swing about a fulcrum. The compartment lid is provided with a key cylinder and a swing knob, and a key may be inserted into the key cylinder and turned whereby the compartment lid is locked and unlocked and the swing knob is caused to swing to enable opening the compartment lid.

Also, a seat is arranged toward the rear of the vehicle relative to the cover and a footboard is arranged between the cover and the seat. The footboard includes a projection disposed centrally in the vehicle width direction to project toward the vehicle upper portion.

The steering shaft extends through the upper top surface of the inner cover and the steering handle is positioned above the upper top surface. Also, the steering handle includes a horizontal portion mounted to the steering shaft, a right upright portion extending upwardly of the vehicle from a right end of the horizontal portion, a left upright portion extending upwardly of the vehicle from a left end of the horizontal portion, a right end extending laterally rightward from an upper end of the right upright portion, and a left end extending laterally leftward from an upper end of the left upright portion.

Such an arrangement is also exemplified in "Honda/bike/silverwing", [online], Honda Giken Kogyo Kabushiki Kaisha, [search on 8th of February, 2007] Internet <URL:http//www.honda.co.jp/motor-lineup/silverwing/>

EP 1 081 032 describes a motorcycle that has a body cover comprising a cowling covering the vehicle body from the front of a steering shaft through the rear side of the front wheel. The body cover further comprises a leg shield covering the rear side of the steering shaft; a footboard constituting a footrest section, and a side cover covering the right and left sides of the vehicle. On an opening defined by the top edge of the cowling and the top edge of the leg shield is mounted a plastic inner panel. In the centre of the panel is a handlebar opening. Forward of the panel is a meter unit in a meter opening. Forward of the meter panel is a meter visor. The meter visor comprises a rear wall rising from the meter opening.

EP 1 864 900 describes a motorcycle comprising a body frame surrounded by a body cover. The body cover includes a leg shield covering the rear side of the front fork. The leg shield includes an inclined wall section, which inclines downwardly to the rear and in which a meter unit mounting hole and handlebar hole are formed. The leg shield further comprises a vertical wall section that extends diagonally forward and downward from a rear edge of the inclined wall section. The leg shield also includes a tunnel section that extends rearward from a lower edge of the vertical wall section. A central storage recess is provided in the vertical wall section of the leg shield. The central storage recess is covered by a lid that is generally flush with the vertical wall section. The tunnel section includes an upper wall section that covers above the fuel tank and left and right side wall sections that extend downward from left and right edges of the upper wall section and cover the left and right sides of the fuel tank. An opening is formed in a section of the upper wall section and a lid that is generally flush with the upper wall section is provided in the opening.

However, the present inventors have discovered that in the known scooter type vehicle, rainwater or the like which contacts the upper top surface of the cover is moved or directed to a center of the upper top surface in the vehicle width direction by wind during traveling in some cases. In this case, rainwater or the like is liable to be splashed or directed towards a seated rider creating rider discomfort.

The invention has been thought of in view of the conventional situation and, as a problem being solved thereby, provides a vehicle, in which rainwater or the like on an upper top surface of a cover is not splashed on a rider during traveling, and rider comfort can be increased when traveling in conditions of rain or the like.

### SUMMARY OF THE INVENTION

Various aspects of the vehicle according to the present invention are defined in the independent claim 1. Some preferred features are defined in the dependent claims 2-10.

Described herein is a vehicle comprising:
a steering shaft;
a cover adapted to cover a periphery of the steering shaft;
a seat arranged toward the rear of a vehicle relative to the cover; and
a footboard arranged between the cover and the seat,
wherein the cover includes an upper top surface extending in a longitudinal direction of the vehicle to face upwardly of the vehicle, said upper top surface comprising:
   a middle surface positioned centrally in a vehicle width direction;
   a right surface positioned on the right of the middle surface;
   a left surface positioned on the left of the middle surface;
   a right, upper bulged portion formed between the middle surface and the right surface to bulge upwardly of the vehicle and extending in the longitudinal direction of the vehicle; and
   a left, upper bulged portion formed between the middle surface and the left surface to bulge upwardly of the vehicle and extending in the longitudinal direction of the vehicle; wherein the vehicle further comprises a windshield screen provided on a front surface of a visor, the visor being provided toward the front of the vehicle, and an outer edge of the windshield screen is disposed outside the bulged portions in a vehicle width direction, such that the windshield screen extends upwardly from the vehicle between positions respectively disposed outside of the right and left, upper bulged portions in a vehicle width direction; wherein
   a right outer edge and a left outer edge of the windshield screen respectively intersect with a right upper panel and a left upper panel, the surfaces of which respectively define the right surface and the left surface of the upper top surface of the cover, at points outside of the bulged portions in the vehicle width direction and the right outer edge and the left outer edge of the windshield screen extend upwardly of the vehicle from such intersection points.

The cover may include an upright wall surface extending downwardly of the vehicle from an edge of the upper top surface toward the rear of the vehicle. The upright wall surface may comprise:
a middle surface positioned centrally in the vehicle width direction;
a right surface positioned on the right of the middle surface;
a left surface positioned on the left of the middle surface;
a right, middle bulged portion formed between the middle surface and the right surface to bulge toward the rear of the vehicle and extending downwardly of the vehicle; and
a left, middle bulged portion formed between the middle surface and the left surface to bulge toward the rear of the vehicle and extending downwardly of the vehicle.

The right, middle bulged portion may be contiguous to the right, upper bulged portion and the left, middle bulged portion may be contiguous to the left, upper bulged portion.

The footboard may include a projection disposed centrally in the vehicle width direction to project upwardly of the vehicle.

The projection may comprise:
a lower top surface extending in the longitudinal direction of the vehicle to face upwardly of the vehicle;
a right, lower bulged portion positioned on the right of the lower top surface and bulging upwardly of the vehicle and extending in the longitudinal direction of the vehicle; and
a left, lower bulged portion positioned on the left of the lower top surface and bulging upwardly of the vehicle and extending in the longitudinal direction of the vehicle.

The right, lower bulged portion may be contiguous to the right, middle bulged portion and the left, lower bulged portion may be contiguous to the left, middle bulged portion.

A switch for operation of a constituent part may be arranged on the middle surface of the upper top surface.

The middle surface of the upper top surface may comprise a non-coated surface. The right surface and the left surface of the upper top surface may comprise a coated surface.

The vehicle further comprises a steering handle mounted on an upper end of the steering shaft. The steering shaft may extend through the upper top surface. The steering handle may be positioned above the upper top surface. A spacing between the right, upper bulged portion and the left, upper bulged portion may enlarge toward the vehicle front.

The steering handle may comprise:
a horizontal portion mounted to the steering shaft;
a right, upright portion extending upwardly of the vehicle from a right end of the horizontal portion;
a left, upright portion extending upwardly of the vehicle from a left end of the horizontal portion;
a right end portion extending rightward from an upper end of the right, upright portion; and
a left end portion extending leftward from an upper end of the left, upright portion.

The right, upright portion and the left, upright portion may be positioned between the right, upper bulged portion and the left, upper bulged portion.

The visor is provided toward the front of the vehicle relative to the steering handle and extending upwardly of the vehicle from the upper top surface and extending in the width direction of the vehicle. The right, upper bulged portion and the left, upper bulged portion abut against both left and right ends of the visor.

The upper top surface may be inclined to become lower toward the rear of the vehicle.

In the vehicle described above, the upper top surface of the cover is partitioned into a middle surface, a right surface, and a left surface, and a right, upper bulged portion and a left, upper bulged portion, respectively, are formed between the middle surface and the right surface and between the middle surface and the left surface. Since the right, upper bulged portion and the left, upper bulged portion, respectively, bulge upwardly of the vehicle and extend in the longitudinal direction of the vehicle, they define weirs on the upper top surface, which weirs are increased in height toward a center in the vehicle width direction Therefore, rainwater, etc. are blocked by the right, upper bulged portion and the left, upper bulged portion. Therefore, with the above vehicle, rainwater, etc. are not moved to the middle surface from the right surface and the left surface of the upper top surface by a wind in traveling and can be prevented from being splashed

on a rider on the seat centrally of the vehicle.

With the vehicle according to the invention, rainwater, etc. on the upper top surface of the cover are not splashed on a rider in traveling, so that the rider can enjoy a comfortable driving even in traveling in rainy weather or the like.

In the vehicle according to the invention, the cover can include an upright wall surface extending downwardly of the vehicle from an edge of the upper top surface toward the vehicle rear. In this case, preferably, the upright wall surface comprises a middle surface positioned centrally in the vehicle width direction, a right surface positioned on the right of the middle surface, a left surface positioned on the left of the middle surface, a right, middle bulged portion formed between the middle surface and the right surface to bulge toward the vehicle rear and extend downwardly of the vehicle, and a left, middle bulged portion formed between the middle surface and the left surface to bulge toward the vehicle rear and extend downwardly of the vehicle, and the right, middle bulged portion is contiguous to the right, upper bulged portion and the left, middle bulged portion is contiguous to the left, upper bulged portion.

In this case, the upright wall surface of the cover is also partitioned into a middle surface, a right surface, and a left surface, and a right, middle bulged portion and a left, middle bulged portion, respectively, are formed between the middle surface and the right surface and between the middle surface and the left surface. Since the right, middle bulged portion and the left, middle bulged portion, respectively, bulge toward the vehicle rear and extend downwardly of the vehicle, they define weirs on the upright wall surface, which weirs are increased in height toward a center in the vehicle width direction. Also, since the right, middle bulged portion and the left, middle bulged portion, respectively, are contiguous to the right, upper bulged portion and the left, upper bulged portion, rainwater, etc. having been blocked by the right, upper bulged portion and the left, upper bulged portion are also blocked by the right, middle bulged portion and the left, middle bulged portion as they are. Therefore, with the scooter type vehicle, even when rainwater, etc. are moved to the right surface and the left surface of the upright wall surface from the upper top surface by a wind in traveling, they are not moved to the middle surface of the upright wall surface and can be prevented from being splashed on a rider. Therefore, a rider can enjoy a further comfortable driving in traveling in rainy weather or the like.

In the vehicle according to the invention, the footboard can include a projection disposed centrally in the vehicle width direction to project upwardly of the vehicle. In this case, preferably, the projection includes a lower top surface extending in the longitudinal direction of the vehicle to face upwardly of the vehicle, a right, lower bulged portion bulging upwardly of the vehicle and extending in the longitudinal direction of the vehicle is formed on the right of the lower top surface, and a left, lower bulged portion bulging upwardly of the vehicle and extending in the longitudinal direction of the vehicle is formed on the left of the lower top surface, the right, lower bulged portion is contiguous to the right, middle bulged portion, and the left, lower bulged portion is contiguous to the left, middle bulged portion.

In this case, the projection of the footboard is formed on the right and the left of the lower top surface with a right, lower bulged portion and a left, lower bulged portion. Since the right, lower bulged portion and the left, lower bulged portion, respectively, bulge upwardly of the vehicle and extend in the longitudinal direction of the vehicle, they define weirs on the right and the left of the lower top surface. Also, since the right, lower bulged portion and the left, lower bulged portion, respectively, are contiguous to the right, middle bulged portion and the left, middle bulged portion, rainwater, etc. having been blocked by the right, middle bulged portion and the left, middle bulged portion are also blocked by the right, lower bulged portion and the left, lower bulged portion as they are. Therefore, with the scooter type vehicle, even when rainwater, etc. are moved to the projection of the footboard from the upper top surface by a wind in traveling, they are not moved to the lower top surface and can be prevented from being splashed on a rider. Therefore, a rider can enjoy a further comfortable driving in traveling in rainy weather or the like.

In the vehicle according to the invention, a switch for operation of a constituent part is preferably arranged on the middle surface of the upper top surface. A constituent part includes a start switch, which starts up an authentication circuit of a so-called smart key system, a compartment lid opener, which opens a compartment lid, a fuel lid opener, which opens a fuel lid, a seat opener, which opens a seat to open a storage box for storage of a helmet or the like, a lock switch, which locks a steering handle, etc., and switches for an audio, a navigation device, etc. In this case, since it is possible to prevent rainwater, etc. from contacting with respective switches, it is possible to prevent failure such as imperfect contact, etc. due to corrosion or the like.

Preferably, the middle surface of the upper top surface comprises a non-coated surface and the right surface and the left surface of the upper top surface comprise a coated surface. In this case, no change in color tone appears on an outer surface even when rub or the like is caused in operation of a switch or switches arranged on the middle surface. Also, a coating film formed by coating can protect even a material, which is a resin, etc. before coating, from deterioration due to ultraviolet ray.

In the vehicle according to the invention, the steering shaft can extend through the upper top surface and the steering handle can be positioned above the upper top surface. In this case, a spacing between the right, upper bulged portion and the left, upper bulged portion preferably enlarges toward the vehicle front. In this case, rainwater, etc. are guided in a manner to be clear of a rider, so that the rider can enjoy a further comfortable driving in traveling in rainy weather or the like.

The steering handle can comprise a horizontal portion mounted to the steering shaft, a right, upright portion extending upwardly of the vehicle from a right end of the horizontal portion, a left, upright portion extending upwardly of the vehicle from a left end of the horizontal portion, a right end portion extending rightward from an upper end of the right, upright portion, and a left end portion extending leftward from an upper end of the left, upright portion. The steering handle may be mounted directly or through a bracket to the steering shaft. In case of using the steering handle, the right, upright portion and the left, upright portion are preferably positioned between the right, upper bulged portion and the left, upper bulged portion. In this case, the right, upper bulged portion and the left, upper bulged portion can be made large in height while avoiding interference with the steering handle, thus enabling adequately exhibiting their functions as weirs.

In the vehicle according to the invention, a visor extending upwardly of the vehicle from the upper top surface and extending in the width direction of the vehicle is provided toward the vehicle front relative to the steering handle. The right, upper bulged portion and the left, upper bulged portion preferably abut against both left and right ends of the visor. In this case, rainwater, etc. in traveling are guided to both left and right ends of the vehicle by the visor and then guided continuously to the right, upper bulged portion and the left, upper bulged portion, so that the effect of the invention can be made further conspicuous. A windshield screen is provided on a front surface of the visor.

In the vehicle according to the invention, the upper top surface is preferably inclined to become low toward the vehicle rear. In this case, rainwater, etc. are hard to remain on the upper top surface during stoppage and in travelling at low speed, so that the effect of the invention can be made further conspicuous.

### BRIEF DESCRIPTION OF THE DRAWINGS

These and other aspects of the present invention will now be described, by way of example only, with reference to the accompanying drawings, in which:
Fig. 1 is a side view showing a vehicle according to an embodiment of the present invention.
Fig. 2 is a side view showing, in enlarged scale, the front of the vehicle according to the embodiment;
Fig. 3 is a plan view showing, in enlarged scale, the front of the vehicle according to the embodiment; and
Fig. 4 is a rear view showing, in enlarged scale, the front of the vehicle according to the embodiment.

### DETAILED DESCRIPTION OF THE DRAWINGS

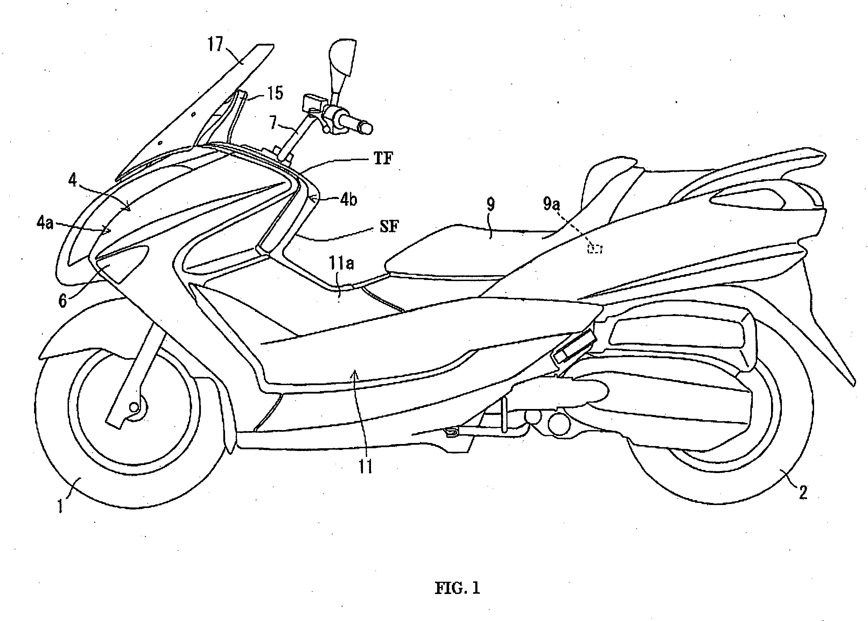

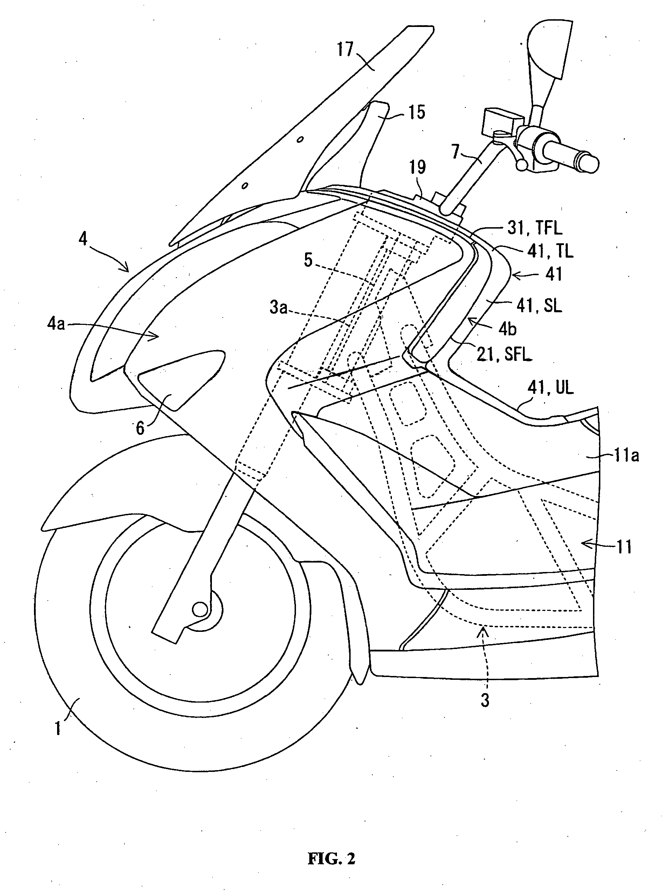

A vehicle according to an embodiment of the present invention is provided as a large-sized scooter having a displacement of 250 cc. As shown in Figs. 1 and 2, the scooter comprises a body frame 3, which supports a front wheel 1, a rear wheel 2, an engine (not shown), etc., and a cover 4 is provided around a head pipe 3a of the body frame 3. The cover 4 is fixed to the body frame 3 through a bracket (not shown). A steering shaft 5 is supported in the head pipe 3a to be able to turn, and a steering handle 7 is fixed to an upper end of the steering shaft 3 through a handle post 19.

The cover 4 includes a front cover 4a positioned on a vehicle front and an inner cover 4b integral with the front cover 4a toward a rear of the vehicle relative to the front cover 4a. The front cover 4a and the inner cover 4b cover a periphery of the steering shaft 5.

The front cover 4a comprises a base material made of a resin, the surfaces of which are coated. A headlight 6 is provided on a front portion of the front cover 4a. Also, a meter visor 15 positioned toward the front of the vehicle relative to the steering handle 7 is fixed at an upper portion of the front cover 4a and a windshield screen 17 is fixed to a front surface of the meter visor 15.

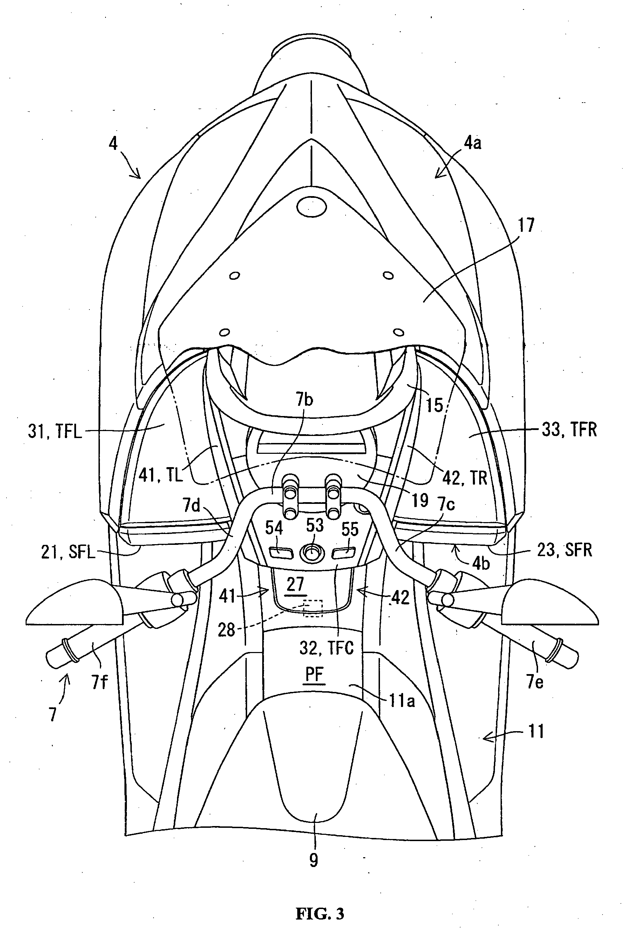

Also, as shown in Fig. 1, a seat 9 is arranged toward the rear of the vehicle relative to the inner cover 4b and a footboard 11 is arranged between the inner cover 4b and the seat 9. The footboard 11 includes a projection 11a disposed centrally in a vehicle width direction and projecting upwardly of the vehicle. As shown in Fig. 3, the projection 11a of the footboard 11 includes a lower top surface PF extending in a longitudinal direction of the vehicle to face upwardly of the vehicle.

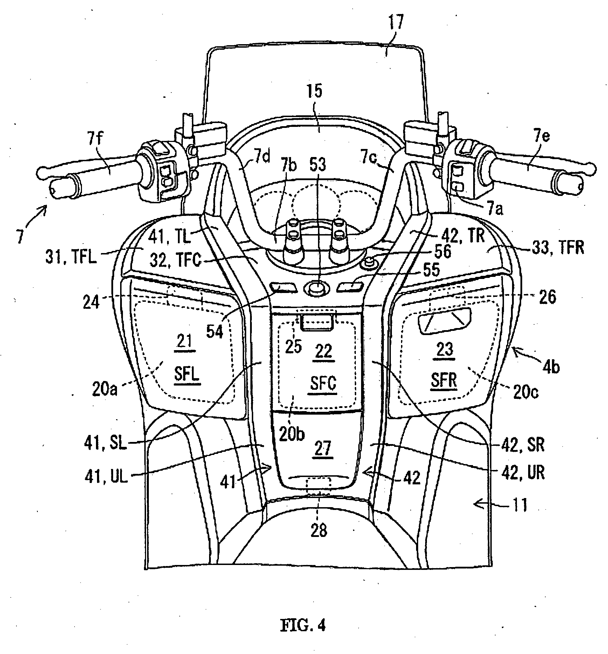

As shown in Fig. 4, the inner cover 4b includes an inner panel (not shown) extending upwardly of the footboard 11, a right compartment lid 23 provided on the right of the inner panel, a middle compartment lid 22 provided centrally of the inner panel, and a left compartment lid 21 provided on the left of the inner panel. The right compartment lid 23 and the left compartment lid 21 comprise a base material made of a resin, the surfaces of which are coated in the same color as that of the front cover 4a, and the middle compartment lid 22 is made of a resin and is not coated. A surface of the right compartment lid 23 defines a right surface SFR, a surface of the middle compartment lid 22 defines a middle surface SFC, and a surface of the left compartment lid 21 defines a left surface SFL.

Compartments 20c, 20b, 20a having insertion ports, which open generally towards the rear of the vehicle, are formed on inner sides of the right compartment lid 23, the middle compartment lid 22 and the left compartment lid 21. Lower ends of the right compartment lid 23, the middle compartment lid 22, and the left compartment lid 21 are supported at lower ends of the respective compartments 20c, 20b, 20a to be able to pivot about fulcrums. Also, compartment lid fixation devices 26, 25, 24 for fixation of respective upper ends of the right compartment lid 23, the middle compartment lid 22, or the left compartment lid 21 are provided at upper ends of the respective compartments 20c, 20b, 20a.

Also, the inner cover 4b includes a right, upper panel 33 extending toward the vehicle front from a right, upper edge of the inner panel and faces upwardly of the vehicle. The inner cover 4b also includes a middle, upper panel 32 extending toward the vehicle front from a middle, upper edge of the inner panel and faces upwardly of the vehicle. The inner cover 4b further includes a left, upper panel 31 extending toward the vehicle front from a left, upper edge of the inner panel and faces upwardly of the vehicle. The right, upper panel 33 and the left, upper panel 31 comprise a base material made of a resin, the surfaces of which are coated in the same color as that of the front cover 4a, and the middle, upper panel 32 is made of a resin and is not coated. The right, upper panel 33 and the left, upper panel 31 afford mounting thereto an audio-speaker, etc. A surface of the right, upper panel 33 defines a right surface TFR, a surface of the middle, upper panel 32 defines a middle surface TFC, and a surface of the left, upper panel 31 defines a left surface TFL.

Also, the inner cover 4b includes a right partition member 42 and a left partition member 41. The right partition member 42 extends between the right compartment lid 23 and the middle compartment lid 22 from between the right, upper panel 33 and the middle, upper panel 32 to extend to the right side of the lower top surface PF of the footboard 11. The left partition member 41 extends between the left compartment lid 21 and the middle compartment lid 22 from between the left, upper panel 31 and the middle, upper panel 32 to extend to the left side of the lower top surface PF of the footboard 11. A spacing between the right partition member 42 and the left partition member 41 on the right, upper panel 33, the middle, upper panel 32, and the left, upper panel 31 enlarges toward the front of the vehicle. A spacing between the right partition member 42 and the left partition member 41 on the left compartment lid 23, the middle compartment lid 22, and the left compartment lid 21 is made substantially in parallel downwardly of the vehicle. The right partition member 42 and the left partition member 41 extend in parallel to each other on the projection 11a of the footboard 11 and then approach each other on a front side of the seat 9 to be connected to each other.

The right partition member 42 positioned between the right surface TFR of the right, upper panel 33 and the middle surface TFC of the middle, upper panel 32 corresponds to a right, upper bulged portion 42TR, which bulges upwardly of the vehicle and extends in the longitudinal direction of the vehicle. Also, the left partition member 41 positioned between the middle surface TFC of the middle, upper panel 32 and the left surface TFL of the left, upper panel 31 corresponds to a left, upper bulged portion 41TL, which bulges upwardly of the vehicle and extends in the longitudinal direction of the vehicle. The right partition member 42 and the left partition member 41 abut against both left and right ends of the meter visor 15.

That is, an upper top surface TF extending in the longitudinal direction of the vehicle to face upwardly of the vehicle comprises a right surface TFR, a middle surface TFC, a left surface TFL, the right, upper bulged portion 42TR, and the left, upper bulged portion 41TL. The upper top surface TF is inclined to become lower toward the rear of the vehicle.

The right partition member 42 positioned between the right surface SFR of the right compartment lid 23 and the middle surface SFC of the middle compartment lid 22 corresponds to a right, middle bulged portion 42SR, which bulges toward the rear of the vehicle and extends downwardly of the vehicle. Also, the left partition member 41 positioned between the middle surface SFC of the middle compartment lid 22 and the left surface SFL of the left compartment lid 21 corresponds to a left, middle bulged portion 41SL, which bulges toward the vehicle rear and extends downwardly of the vehicle. Since the right partition member 42 and the left partition member 41 are contiguous to each other toward the rear of the vehicle, the right, middle bulged portion 42SR is contiguous to the right, upper bulged portion 42TR and the left, middle bulged portion 41SL is contiguous to the left, upper bulged portion 41TL.

That is, an upright wall surface SF extending downwardly of the vehicle from an edge of the upper top surface TF toward the rear of the vehicle is composed of the right surface SFR, the middle surface SFC, the left surface SFL, the right, middle bulged portion 42SR, and the left, middle bulged portion 41SL. As shown in Fig. 2, the upright wall surface SF is inclined so that a lower portion thereof is positioned toward the front of the vehicle relative to an upper portion thereof.

As shown in Fig. 3, the right partition member 42 is positioned on the right of the lower top surface PF of the footboard 11 and the left partition member 41 is positioned on the left of the lower top surface PF. The right partition member 42 on the projection 11a corresponds to a right, lower bulged portion 42UR, which bulges upwardly of the vehicle and extends in the longitudinal direction of the vehicle. Also, the left partition member 41 on the projection 11a corresponds to a left, lower bulged portion 41UL, which bulges upwardly of the vehicle and extends in the longitudinal direction of the vehicle. Since the right partition member 42 and the left partition member 41 are contiguous to each other toward the rear of the vehicle, the right, lower bulged portion 42UR is contiguous to the right, middle bulged portion 42SR and the left, lower bulged portion 41UL is contiguous to the left, middle bulged portion 41SL.

A fuel tank (not shown) is accommodated in the projection 11a of the footboard 11 and a fuel cap mounted to a fuel supply port of the fuel tank is opened and closed by a fuel lid 27 provided on the projection 11a as shown in Figs. 3 and 4. The fuel lid 27 has a front end thereof supported to be able to pivot about a fulcrum. A rear end of the fuel lid 27 is fixed to the footboard 11 by a fuel lid fixation device 28.

A front end of the seat 9 shown in Fig. 1 is supported on a vehicle body to be able to pivot about a fulcrum and the seat 9 is caused to swing forward whereby a storage box for storage of a helmet or the like can be opened. A seat fixation device 9a for fixation of a rear end of the seat 9 to the body frame 3 is provided between the body frame 3 and the seat 9.

Also, as shown in Fig. 2, the steering shaft 5 extends through the middle, upper panel 32 of the cover 4 to be fixed to the handle post 19 on the middle, upper panel 32. The scooter adopts a so-called smart key system and as shown in Figs. 3 and 4, the start switch 53 of the smart key system is arranged rearwardly of the handle post 19 on the middle, upper panel 32 of the scooter. The start switch 53 is of a push type.

As shown in Figs. 3 and 4, the steering handle 7 comprises a horizontal portion 7b mounted to the handle post 19, a right, upright portion 7c extending upwardly of the vehicle from a right end of the horizontal portion 7b, a left, upright portion 7d extending upwardly of the vehicle from a left end of the horizontal portion 7b, a right end portion 7e extending rightward from an upper end of the right, upright portion 7c, and a left end portion 7f extending leftward from an upper end of the left, upright portion 7d. The right, upright portion 7c and the left, upright portion 7d are positioned between the right partition member 42 and the left partition member 41.

As shown in Fig. 4, a starter-motor switch 7a is provided close to a grip on the right end portion 7e of the steering handle 7. Also, a push type compartment lid opener 54 is arranged just on the left of the start switch 53. A push type combined use opener 55 is arranged just on the right of the start switch 53. The combined use opener 55 functions as a fuel lid opener when depressed or activated for a short period of time and functions as a seat opener when depressed or activated for a long period of time. Also, a push type lock switch 56 is arranged on the right of the handle post 19.

With the scooter constructed in the manner described above, the right, upper bulged portion 42TR and the left, upper bulged portion 41TL form weirs being increased in height toward a center on the upper top surface TF in the vehicle width direction. Also, the right, middle bulged portion 42SR and the left, middle bulged portion 41SL, which are contiguous to the right, upper bulged portion 42TR and the left, upper bulged portion 41TL, form weirs toward a center on the upright wall surface SF in the vehicle width direction. Further, the right, lower bulged portion 42UR and the left, lower bulged portion 41UL, which are contiguous to the right, middle bulged portion 42SR and the left, middle bulged portion 41SL, form weirs on the left and right of the lower top surface PF. Therefore, rainwater, etc. will be prevented from moving towards the centre of the vehicle by the right, upper bulged portion 42TR, the right, middle bulged portion 42SR, the right, lower bulged portion 42UR, the left, upper bulged portion 42TL, the left, middle bulged portion 41SL, and the right, lower bulged portion 42UL. Accordingly, this arrangement assists to prevent a seated rider from being splashed. In particular, since the scooter adopts the screen 17 and the meter visor 15 and a spacing between the right, upper bulged portion 42TR and the left, upper bulged portion 41TL enlarges toward the vehicle front, rainwater, etc. are guided in a manner to be clear of a rider.

Accordingly, with the scooter, rainwater, etc. on the upper top surface TF of the cover 4 is prevented from being splashed on a rider, so that rider comfort can be achieved, even when traveling in conditions of rain or the like.

Also, since the start switch 53, the compartment lid opener 54, and the combined use opener 55 are arranged on the middle surface TFC of the upper top surface TF, the scooter can prevent rainwater, etc. from contacting with the start switch 53, etc., so that it is possible to prevent failure such as imperfect contact, etc. due to corrosion or the like. In particular, since the upper top surface TF is inclined to become lower toward the rear of the vehicle, rainwater, etc. will be prevented from stagnating or pooling on the upper top surface TF, even when the vehicle is stationary or is traveling at low speed, thus protecting the start switch 53, etc. from rainwater, etc.

Further, with the scooter, since the middle surface TFC of the upper top surface TF, on which the start switch 53, etc. are arranged, is not coated, no change in color tone appears on an outer surface even when rubbing or the like is caused during operation of the start switch 53, etc. over time. Also, a coating film formed by coating on the right surface TFR and the left surface TFL can protect even a material, which is a resin, etc. before coating, from deterioration due to ultraviolet radiation.

Also, since the scooter adopts the steering handle 7 constructed in the manner described above, the right, upper bulged portion 42TR and the left, upper bulged portion 41TL can be made large in height while avoiding interference with the steering handle 7, thus enabling adequately exhibiting their functions as weirs.

While the invention has been described above on the basis of the embodiment, it should be understood that the invention is not limited to the embodiment but can be appropriately modified within the scope of the appended claims.

For example, the footboard 11 may not include the projection 11a, which is disposed centrally of the vehicle in the width direction to project upwardly of the vehicle, but may comprise a flat surface continuing in the vehicle width direction.

The invention can be made use of for scooters, buggies, snowmobiles, etc.

### Description of Reference Numerals and Signs

3a: head pipe
5: steering shaft
7: steering handle
4: cover
9: seat
11: footboard
TF: upper top surface (TFC: middle surface, TFR: right surface, TFL: left surface, 42TR: right, upper bulged portion, 41TL: left, upper bulged portion)
SF: upright wall surface (SFC: middle surface, SFR: right surface, SFL: left surface, 42SR: right, middle bulged portion, 41SL: left, middle bulged portion)
11a: projection
PF: lower top surface
42UR: right, upper bulged portion
41UL: left, upper bulged portion
53: start switch
54: compartment lid opener
55: combined use opener
7b: horizontal portion
7c: right, upright portion
7d: left, upright portion
7e: right end portion
7f: left end portion
15: meter visor

## Claims

1. A vehicle comprising:
a steering shaft (5);
a cover (4) adapted to cover a periphery of the steering shaft (5);
a seat (9) arranged toward the rear of the vehicle relative to the cover (4);
and
a footboard (11) arranged between the cover (4) and the seat (9),
wherein the cover (4) includes an upper top surface (TF) extending in a longitudinal direction of the vehicle to face upwardly of the vehicle, said upper top surface (TF) comprising:
a middle surface (TFC) positioned centrally in a vehicle width direction;
a right surface (TFR) positioned on the right of the middle surface (TFC);
a left surface (TFL) positioned on the left of the middle surface (TFC);
a right, upper bulged portion (42TR) formed between the middle surface (TFC) and the right surface (TFR) to bulge upwardly of the vehicle and extending in the longitudinal direction of the vehicle;
a left, upper bulged portion (41TL) formed between the middle surface (TFC) and the left surface (TFL) to bulge upwardly of the vehicle and extending in the longitudinal direction of the vehicle; and
the vehicle further comprises a windshield screen (17) provided on a front surface of a visor (15), the visor (15) being provided toward the front of the vehicle,
and a right outer edge and a left outer edge of the windshield screen (17) are disposed outside the bulged portions (42TR, 41TL) in the vehicle width direction, such that the windshield screen (17) extends upwardly from the vehicle between positions respectively disposed outside of the right and left, upper bulged portions (42TR, 41 TL) in the vehicle width direction; wherein
the right outer edge and the left outer edge of the windshield screen (17) respectively intersect with a right upper panel (33) and a left upper panel (31), the surfaces of which respectively define the right surface (TFR) and the left surface (TFL) of the upper top surface (TF) of the cover (4), at points outside of the bulged portions (41 TL, 42TR) in the vehicle width direction and the right outer edge and the left outer edge of the windshield screen (17) extend upwardly of the vehicle from such intersection points;
and the vehicle further comprises a steering handle (7) mounted on an upper end of the steering shaft (5), and the visor (15) is provided toward the vehicle front relative to the steering handle (7) and extending upwardly of the vehicle from the upper top surface (TF) and extending in the width direction of the vehicle wherein the right, upper bulged portion (42TR) and the left, upper bulged portion (41TL) abut against both the left and right ends of the visor (15).

2. The vehicle according to claim 1, wherein the cover (4) includes an upright wall surface (SF) extending downwardly of the vehicle from an edge of the upper top surface (TF) toward the rear of the vehicle, wherein the upright wall surface (SF) comprises:
a middle surface (SFC) positioned centrally in the vehicle width direction;
a right surface (SFR) positioned on the right of the middle surface (SFC);
a left surface (SFL) positioned on the left of the middle surface (SFC);
a right, middle bulged portion (42SR) formed between the middle surface (SFC) and the right surface (SFR) to bulge toward the rear of the vehicle and extending downwardly of the vehicle; and
a left, middle bulged portion (41 SL) formed between the middle surface (SFC) and the left surface (SFL) to bulge toward the rear of the vehicle and extending downwardly of the vehicle.

3. The vehicle according to claim 2, wherein the right, middle bulged portion (42SR) is contiguous to the right, upper bulged portion (42TR) and the left, middle bulged portion (41 SL) is contiguous to the left, upper bulged portion (41 TL).

4. The vehicle according to any preceding claim, wherein the footboard (11) includes a projection (11a) disposed centrally in the vehicle width direction to project upwardly of the vehicle, wherein the projection (11 a) comprises:
a lower top surface (PF) extending in the longitudinal direction of the vehicle to face upwardly of the vehicle;
a right, lower bulged portion (42UR) positioned on the right of the lower top surface (PF) and bulging upwardly of the vehicle and extending in the longitudinal direction of the vehicle; and
a left, lower bulged portion (41 UL) positioned on the left of the lower top surface (PF) and bulging upwardly of the vehicle and extending in the longitudinal direction of the vehicle.

5. The vehicle according to claim 4, when dependent on claim 3, wherein the right, lower bulged portion (42UR) is contiguous to the right, middle bulged portion (42SR) and the left, lower bulged portion (41 UL) is contiguous to the left, middle bulged portion (41 SL).

6. The vehicle according to claim 1, wherein a switch (53, 54, 55) for operation of a constituent part is arranged on the middle surface (TFC) of the upper top surface (TF).

7. The vehicle according to any preceding claim, wherein the middle surface (TFC) of the upper top surface (TF) comprises a non-coated surface and the right surface (TFR) and the left surface (TFL) of the upper top surface (TF) comprise a coated surface.

8. The vehicle according to any preceding claim, wherein the steering shaft (5) extends through the upper top surface (TF), the steering handle (7) being positioned above the upper top surface (TF), and a spacing between the right, upper bulged portion (42TR) and the left, upper bulged portion (41 TL) enlarges toward the front of the vehicle.

9. The vehicle according to claim 8, wherein the steering handle (7) comprises:
a horizontal portion (7b) mounted to the steering shaft (5);
a right, upright portion (7c) extending upwardly of the vehicle from a right end of the horizontal portion (7b);
a left, upright portion (7d) extending upwardly of the vehicle from a left end of the horizontal portion (7b);
a right end portion (7e) extending rightward from an upper end of the right, upright portion (7c); and
a left end portion (7f) extending leftward from an upper end of the left, upright portion (7d),
wherein the right, upright portion (7c) and the left, upright portion (7d) are positioned between the right, upper bulged portion (42TR) and the left, upper bulged portion (41TL).

10. The vehicle according to any preceding claim, wherein the upper top surface (TF) is inclined to become lower toward the rear of the vehicle.

## Patentansprüche

1. Fahrzeug, das Folgendes umfasst:
eine Lenkwelle (5),
eine Haube (4), die dafür eingerichtet ist, einen Umfang der Lenkwelle (5) abzudecken,
einen Sitz (9), der im Verhältnis zu der Haube (4) zum hinteren Teil des Fahrzeugs hin angeordnet ist,
ein Trittbrett (11), das zwischen der Haube (4) und dem Sitz (9) angeordnet ist,
wobei die Haube (4) eine obere Deckfläche (TF) einschließt, die sich in einer Längsrichtung des Fahrzeugs erstreckt, um von dem Fahrzeug nach oben zu zeigen, wobei die obere Deckfläche (TF) Folgendes umfasst:
eine mittlere Fläche (TFC), die mittig in der Fahrzeugbreitenrichtung angeordnet ist,
eine rechte Fläche (TFR), die rechts von der mittleren Fläche (TFC) angeordnet ist,
eine linke Fläche (TFL), die links von der mittleren Fläche (TFL) angeordnet ist,
einen rechten, oberen gewölbten Abschnitt (42TR), der zwischen der mittleren Fläche (TFC) und der rechten Fläche (TFR) geformt ist, so dass er sich von dem Fahrzeug nach oben wölbt, und sich in der Längsrichtung des Fahrzeugs erstreckt,
einen linken, oberen gewölbten Abschnitt (41TL), der zwischen der mittleren Fläche (TFC) und der linken Fläche (TFL) geformt ist, so dass er sich von dem Fahrzeug nach oben wölbt, und sich in der Längsrichtung des Fahrzeugs erstreckt, und
wobei das Fahrzeug ferner eine Windschutzscheibe (17) umfasst, die an einer vorderen Fläche eines Visiers (15) bereitgestellt wird, wobei das Visier (15) zum Vorderteil des Fahrzeugs hin bereitgestellt wird, und eine rechte Außenkante und eine linke Außenkante der Windschutzscheibe (17) außerhalb der gewölbten Abschnitte (42TR, 41TL) in der Fahrzeugbreitenrichtung angeordnet sind derart, dass sich die Windschutzscheibe (17) von dem Fahrzeug nach oben erstreckt, zwischen Positionen, die jeweils außerhalb des rechten und des linken, oberen gewölbten Abschnitts (42TR, 41TL) in der Fahrzeugbreitenrichtung angeordnet sind, wobei
sich die rechte Außenkante und die linke Außenkante der Windschutzscheibe (17) jeweils mit einer rechten oberen Tafel (33) beziehungsweise einer linken oberen Tafel (31), deren Flächen jeweils die rechte Fläche (TFR) beziehungsweise die linke Fläche (TFL) der oberen Deckfläche (TF) der Haube (4) definieren, an Punkten außerhalb der gewölbten Abschnitte (41TL, 42TR) in der Fahrzeugbreitenrichtung überschneiden und sich die rechte Außenkante und die linke Außenkante der Windschutzscheibe (17) von solchen Überschneidungspunkten aus von dem Fahrzeug nach oben erstrecken,
und das Fahrzeug ferner einen Lenker (7) umfasst, der an einem oberen Ende der Lenkwelle (5) angebracht ist, und das Visier (15) im Verhältnis zu dem Lenker (7) zum Fahrzeugvorderteil hin bereitgestellt wird und sich von der oberen Deckfläche (TF) aus von dem Fahrzeug nach oben erstreckt und sich in der Breitenrichtung des Fahrzeugs erstreckt, wobei der rechte, obere gewölbte Abschnitt (42TR) und der linke, obere gewölbte Abschnitt (41TL) sowohl an das linke als auch an das rechte Ende des Visiers (15) anstoßen.

2. Fahrzeug nach Anspruch 1, wobei die Haube (4) eine aufrechte Wandfläche (SF) einschließt, die sich von einer Kante der oberen Deckfläche (TF) aus von dem Fahrzeug nach unten, zu dem hinteren Teil des Fahrzeugs erstreckt, wobei die aufrechte Wandfläche (SF) Folgendes umfasst:
eine mittlere Fläche (SFC), die mittig in der Fahrzeugbreitenrichtung angeordnet ist,
eine rechte Fläche (SFR), die rechts von der mittleren Fläche (SFC) angeordnet ist,
eine linke Fläche (SFL), die links von der mittleren Fläche (SFL) angeordnet ist,
einen rechten, mittleren gewölbten Abschnitt (42SR), der zwischen der mittleren Fläche (SFC) und der rechten Fläche (SFR) geformt ist, so dass er sich zu dem hinteren Teil des Fahrzeugs hin wölbt, und sich von dem Fahrzeug nach unten erstreckt, und
einen linken, mittleren gewölbten Abschnitt (41SL), der zwischen der mittleren Fläche (SFC) und der linken Fläche (SFL) geformt ist, so dass er sich von dem Fahrzeug nach oben wölbt, und sich von dem Fahrzeug nach unten erstreckt.

3. Fahrzeug nach Anspruch 2, wobei der rechte, mittlere gewölbte Abschnitt (42SR) dem rechten, oberen gewölbten Abschnitt (42TR) benachbart ist und der linkte, mittlere gewölbte Abschnitt (41SL) dem linken, oberen gewölbten Abschnitt (41TL) benachbart ist.

4. Fahrzeug nach einem der vorhergehenden Ansprüche, wobei das Trittbrett (11) einen Vorsprung (11a) einschließt, der mittig in der Fahrzeugbreitenrichtung angeordnet ist, so dass er von dem Fahrzeug nach oben vorspringt, wobei der Vorsprung (11a) Folgendes umfasst:
eine untere Deckfläche (PF) einschließt, die sich in einer Längsrichtung des Fahrzeugs erstreckt, um von dem Fahrzeug nach oben zu zeigen,
einen rechten, unteren gewölbten Abschnitt (42UR), der rechts von der oberen Deckfläche (PR) angeordnet ist und sich von dem Fahrzeug nach oben wölbt und sich in der Längsrichtung des Fahrzeugs erstreckt, und
einen linken, unteren gewölbten Abschnitt (41UL), der links von der oberen Deckfläche (PR) angeordnet ist und sich von dem Fahrzeug nach oben wölbt und sich in der Längsrichtung des Fahrzeugs erstreckt.

5. Fahrzeug nach Anspruch 4, soweit abhängig von Anspruch 3, wobei der rechte, untere gewölbte Abschnitt (42UR) dem rechten, mittleren gewölbten Abschnitt (42SR) benachbart ist und der linkte, untere gewölbte Abschnitt (41UL) dem linken, mittleren gewölbten Abschnitt (41SL) benachbart ist.

6. Fahrzeug nach Anspruch 1, wobei ein Schalter (53, 54, 55) zur Betätigung eines Bestandteils auf der mittleren Fläche (TFC) der oberen Deckfläche (TF) angeordnet ist.

7. Fahrzeug nach einem der vorhergehenden Ansprüche, wobei die mittlere Fläche (TFC) der oberen Deckfläche (TF) eine nicht beschichtete Oberfläche umfasst und die rechte Fläche (TFR) und die linke Fläche (TFL) der oberen Deckfläche (TF) eine beschichtete Oberfläche umfassen.

8. Fahrzeug nach einem der vorhergehenden Ansprüche, wobei sich die Lenkwelle (5) durch die obere Deckfläche (TF) erstreckt, wobei der Lenker (7) oberhalb der oberen Deckfläche (TF) angeordnet ist und sich ein Abstand zwischen dem rechten, oberen gewölbten Abschnitt (42TR) und dem linken, oberen gewölbten Abschnitt (41TL) zum Vorderteil des Fahrzeugs hin vergrößert.

9. Fahrzeug nach Anspruch 8, wobei der Lenker (7) Folgendes umfasst:
einen horizontalen Abschnitt (7b), der an der Lenkwelle (5) angebracht ist,
einen rechten, aufrechten Abschnitt (7c), der sich von einem rechten Ende des horizontalen Abschnitts (7b) aus von dem Fahrzeug nach oben erstreckt,
einen linken, aufrechten Abschnitt (7d), der sich von einem linken Ende des horizontalen Abschnitts (7b) aus von dem Fahrzeug nach oben erstreckt,
einen rechten Endabschnitt (7e), der sich von einem oberen Ende des rechten, aufrechten Abschnitts (7c) aus nach rechts erstreckt, und
einen linken Endabschnitt (7f), der sich von einem oberen Ende des linken, aufrechten Abschnitts (7d) aus nach links erstreckt,
wobei der rechte, aufrechte Abschnitt (7c) und der linke, aufrechte Abschnitt (7d) zwischen dem rechten, oberen gewölbten Abschnitt (42TR) und dem linken, oberen gewölbten Abschnitt (41TL) angeordnet sind.

10. Fahrzeug nach einem der vorhergehenden Ansprüche, wobei die obere Deckfläche (TF) so geneigt ist, dass sie zum hinteren Teil des Fahrzeugs hin niedriger wird.

## Revendications

1. Véhicule, comprenant :
un arbre de direction (5) ;
un capot (4), adapté pour recouvrir une périphérie de l'arbre de direction (5) ;
un siège (9), agencé vers l'arrière du véhicule par rapport au capot (4) ; et
un marchepied (11), agencé entre le capot (4) et le siège (9) ;
dans lequel le capot (4) englobe une surface de tête supérieure (TF), s'étendant dans une direction longitudinale du véhicule et orientée vers le haut du véhicule, ladite surface de tête supérieure (TF) comprenant :
une surface centrale (TFC), positionnée de manière centrale dans une direction de la largeur du véhicule ;
une surface de droite (TFR), positionnée sur la droite de la surface centrale (TFC) ;
une surface de gauche (TFL), positionnée sur la gauche de la surface centrale (TFC) ;
une partie bombée supérieure de droite (42TR), formée entre la surface centrale (TFC) et la surface de droite (TFR), bombée vers le haut du véhicule et s'étendant dans la direction longitudinale du véhicule ;
une partie bombée supérieure de gauche (41TL), formée entre la surface centrale (TFC) et la surface de gauche (TFL), bombée vers le haut du véhicule et s'étendant dans la direction longitudinale du véhicule ; et
le véhicule comprenant en outre un pare-brise (17), agencé sur une surface frontale d'une visière (15), la visière (15) étant agencée vers l'avant du véhicule, un bord externe de droite et un bord externe de gauche du pare-brise (17) étant agencés à l'extérieur des parties bombées (42TR, 41TL) dans la direction de la largeur du véhicule, de sorte que le pare-brise (17) s'étend vers le haut du véhicule, entre des positions respectivement agencées à l'extérieur de parties bombées supérieures de droite et de gauche (42TR, 41 TL), dans la direction de la largeur du véhicule ; dans lequel
le bord externe de droite et le bord externe de gauche du pare-brise (17) coupent respectivement un panneau supérieur de droite (33) et un panneau supérieur de gauche (31), les surfaces de ceux-ci définissant respectivement la surface de droite (TFR) et la surface de gauche (TFL) de la surface de tête supérieure (TF) du capot (4), au niveau de points situés à l'extérieur des parties bombées (41TL, 42TR), dans la direction de la largeur du véhicule, le bord externe de droite et le bord externe de gauche du pare-brise (17) s'étendant vers le haut du véhicule à partir de ces points d' intersection ;
et le véhicule comprenant en outre un guidon de direction (7), monté sur une extrémité supérieure de l'arbre de direction (5), la visière (15) étant agencé vers l'avant du véhicule par rapport au guidon de direction (7), s'étendant vers le haut du véhicule à partir de la surface de tête supérieure (TF), et s'étendant dans la direction de la largeur du véhicule, dans lequel la partie bombée supérieure de droite (42TR) et la partie supérieure bombée de gauche (41TL) butent contre les extrémités de gauche et de droite de la visière (15).

2. Véhicule selon la revendication 1, dans lequel le capot (4) englobe une surface de paroi verticale (SF), s'étendant vers le bas du véhicule à partir d'un bord de la surface de tête supérieure (TF) vers l'arrière du véhicule, la surface de paroi verticale (SF) comprenant :
une surface centrale (SFC), positionnée de manière centrale dans la direction de la largeur du véhicule ;
une surface de droite (SFR), positionnée sur la droite de la surface centrale (SFC) ;
une surface de gauche (SFL), positionnée sur la gauche de la surface centrale (SFC) ;
une partie bombée centrale de droite (42SR), formée entre la surface centrale (SFC) et la surface de droite (SFR), bombée vers l'arrière du véhicule et s'étendant vers le bas du véhicule ; et
une partie bombée centrale de gauche (41SL), formée entre la surface centrale (SFC) et la surface de gauche (SFL), bombée vers l'arrière du véhicule et s'étendant vers le bas du véhicule.

3. Véhicule selon la revendication 2, dans lequel la partie bombée centrale de droite (42SR) est contiguë à la partie bombée supérieure de droite (42TR), la partie bombée centrale de gauche (41SL) étant contiguë à la partie bombée supérieure de gauche (41TL).

4. Véhicule selon l'une quelconque des revendications précédentes, dans lequel le marchepied (11) englobe une saillie (1 la), agencée de manière centrale dans la direction de la largeur du véhicule et débordant vers le haut du véhicule, la saillie (11a) comprenant :
une surface de tête inférieure (PF), s'étendant dans la direction longitudinale du véhicule et orientée vers le haut du véhicule ;
une partie bombée inférieure de droite (42UR), positionnée sur la droite de la surface de tête inférieure (PF), bombée vers le haut du véhicule et s'étendant dans la direction longitudinale du véhicule ; et
une partie bombée inférieure de gauche (41UL), positionnée sur la gauche de la surface de tête inférieure (PF), bombée vers le haut du véhicule et s'étendant dans la direction longitudinale du véhicule.

5. Véhicule selon la revendication 4, dépendant de la revendication 3, dans lequel la partie bombée inférieure de droite (42UR) est contiguë à la partie bombée centrale de droite (42SR), la partie bombée inférieure de gauche (41UL) étant contiguë à la partie bombée centrale de gauche (41SL).

6. Véhicule selon la revendication 1, dans lequel un interrupteur (53, 54, 55) pour l'actionnement d'un composant est agencé sur la surface centrale (TFC) de la surface de tête supérieure (TF).

7. Véhicule selon l'une quelconque des revendications précédentes, dans lequel la surface centrale (TFC) de la surface de tête supérieure (TF) comprend une surface non revêtue, la surface de droite (TFR) et la surface de gauche (TFL) de la surface de tête supérieure (TF) comprenant une surface revêtue.

8. Véhicule selon l'une quelconque des revendications précédentes, dans lequel l'arbre de direction (5) s'étend à travers la surface de tête supérieure (TF), le guidon de direction (7) étant positionné au-dessus de la surface de tête supérieure (TF), et un espace entre la partie bombée supérieure de droite (42TR) et la partie bombée supérieure de gauche (41TL) étant élargi en direction de l'avant du véhicule.

9. Véhicule selon la revendication 8, dans lequel le guidon de direction (7) comprend :
une partie horizontale (7b), montée sur l'arbre de direction (5) ;
une partie verticale de droite (7c), s'étendant vers le haut du véhicule à partir d'une extrémité de droite de la partie horizontale (7b) ;
une partie verticale de gauche (7d), s'étendant vers le haut du véhicule à partir d'une extrémité de gauche de la partie horizontale (7b) ;
une partie d'extrémité de droite (7e), s'étendant vers la droite à partir d'une extrémité supérieure de la partie verticale de droite (7c) ; et
une partie d'extrémité de gauche (7f), s'étendant vers la gauche à partir d'une extrémité supérieure de la partie verticale de gauche (7d) ;
dans lequel la partie verticale de droite (7c) et la partie verticale de gauche (7d) sont positionnées entre la partie bombée supérieure de droite (42TR) et la partie bombée supérieure de gauche (41TL).

10. Véhicule selon l'une quelconque des revendications précédentes, dans lequel la surface de tête supérieure (TF) est inclinée pour être abaissée en direction de l'arrière du véhicule.
